# EUROPEAN PATENT APPLICATION

(11) **EP 4 628 456 A1**
(43) Date of publication of application: **08.10.2025**
(21) Application number: 23897099.0
(22) Date of filing: 01.06.2023
(51) Int. Cl.: C02F 1/52, B01D 21/01, C01B 7/14

(54) **METHOD FOR PRODUCING UREA COMPONENT-CONTAINING AQUEOUS SOLUTION BY USING INORGANIC FLOCCULANT HAVING SELECTIVE REMOVAL CAPABILITY FOR FLUORIDE IONS AND PHOSPHATE IONS**

(30) Priority: 30.11.2022 JP 2022191318
(71) Applicant: Godo Shigen Co., Ltd., Chiba, 299-4333 (JP); Nihonkaisui Co., Ltd., Tokyo 101-0062 (JP)
(72) Inventor: BABA Masahiko, Chosei-gun, Chiba 299-4333 (JP); NAKAMURA Yuki, Chosei-gun, Chiba 299-4333 (JP); ITO Tomohiko, Tokyo 101-0062 (JP); SHIBUYA Toru, Tokyo 101-0062 (JP)
(74) Representative: Müller-Boré & Partner Patentanwälte PartG mbB
(86) International application number: PCT/JP2023/020491
(87) International publication number: WO 2024/116439

(57) **Abstract**

A method for producing an iodine component-containing aqueous solution according to the present invention includes a flocculation step of bringing an inorganic flocculant that selectively reacts with fluoride ions and/or phosphate ions more than with iodide ions into contact with untreated water containing iodide ions and fluoride ions and/or phosphate ions, to obtain an aggregate formed by a reaction between the fluoride ions and/or the phosphate ions and the inorganic flocculant, and a separation step of removing the aggregate from the untreated water to leave the iodide ions in the untreated water, to obtain treated water.

## Description

### TECHNICAL FIELD

The present invention relates to a method for producing an iodine component-containing aqueous solution using an inorganic flocculant having selective removal property of fluoride ions and phosphate ions.

### BACKGROUND ART

So far, various developments have been made on a method of selectively recovering iodide ions from a non-treated liquid containing iodide ions and fluoride ions. As this type of technique, for example, the technique disclosed in Patent Document 1 is known. Patent Document 1 describes a method of separating iodide ions from a non-treated liquid containing at least one of fluoride ions or boron ions by an electrodialysis method (claim 1 and the like of Patent Document 1).

### RELATED DOCUMENT

### PATENT DOCUMENT

Patent Document 1: Japanese Unexamined Patent Publication No. 2022-97182

### SUMMARY OF THE INVENTION

### TECHNICAL PROBLEM

It has been known as a general method to selectively recover iodide ions from a non-treated liquid containing iodide ions and fluoride ions by an electrodialysis method.

However, as a result of the studies conducted by the present inventors, it has found that the concentration of fluoride ions in untreated water cannot be sufficiently reduced by the electrodialysis method (Comparative Example of Patent Document 1 described above), and the studies have been made on another method different from the electrodialysis method.

### SOLUTION TO PROBLEM

As a result of further studies, the inventors of the present invention have found an inorganic flocculant that selectively reacts with fluoride ions to form an aggregate but does not selectively react with iodide ions. Based on such findings, further intensive studies were conducted, and as a result, it was found that in a case where an inorganic flocculant having iodide ion non-selectivity is used, fluoride ions can be selectively separated from untreated water containing iodide ions and fluoride ions, and thus an aggregate method capable of sufficiently reducing the concentration of fluoride ions can be found, whereby the present invention has been completed.

According to the study by the present inventors, it has been found that, in the aggregate method using an inorganic flocculant having iodide ion non-selectivity, phosphate ions can also be selectively separated from iodide ions, similarly to fluoride ions.

According to one aspect of the present invention, there is provided a method for producing an iodine component-containing aqueous solution.
1. A method for producing an iodine component-containing aqueous solution, including:
   a flocculation step of bringing an inorganic flocculant that selectively reacts with fluoride ions and/or phosphate ions more than with iodide ions into contact with untreated water containing iodide ions and fluoride ions and/or phosphate ions, to obtain an aggregate formed by a reaction between the fluoride ions and/or the phosphate ions and the inorganic flocculant; and
   a separation step of removing the aggregate from the untreated water to leave the iodide ions in the untreated water, to obtain treated water,
   in which the inorganic flocculant includes one or two or more selected from the group consisting of a cerium-based flocculant, a zirconium-based flocculant, an aluminum-based flocculant, a calcium-based flocculant, and an iron-based flocculant.
2. The method for producing an iodine component-containing aqueous solution according to 1.,
   in which, in the flocculation step, a pH of the untreated water containing the inorganic flocculant is 3.0 or more and 11.5 or less.
3. The method for producing an iodine component-containing aqueous solution according to 1. or 2.,
   in which, in a case where a volume frequency particle size distribution is measured using a laser diffraction scattering method, and a particle diameter corresponding to 50% cumulative distribution from a smaller side in the volume frequency particle size distribution is defined as D₅₀, the D₅₀ of the aggregate is 1 µm or more and 300 µm or less.
4. The method for producing an iodine component-containing aqueous solution according to any one of 1. to 3.,
   in which, in a case where a concentration of the iodide ions in the untreated water is denoted by C_{Ia} (mg/L) and a concentration of the iodide ions in the treated water is denoted by C_{Ib} (mg/L), a recovery rate of the iodide ions calculated by (C_{Ib}/C_{Ia}) × 100 is 90% or more.
5. The method for producing an iodine component-containing aqueous solution according to 4.,
   in which, in a case where a concentration of the fluoride ions in the untreated water is denoted by C_{Fa} (mg/L), a concentration of the phosphate ions in the untreated water is denoted by C_{Pa} (mg/L), a concentration of the fluoride ions in the treated water is denoted by C_{Fb} (mg/L), and a concentration of the phosphate ions in the treated water is denoted by C_{Pb} (mg/L), a residual rate of the fluoride ions calculated by [100 - [(C_{Fa} - C_{Fb})/C_{Fa}] × 100] is 5% or less, or
   a residual rate of the phosphate ions calculated by [100 - [(C_{Pa} - C_{Pb})/C_{Pa}] × 100] is 5% or less.
6. The method for producing an iodine component-containing aqueous solution according to 5.,
   in which the iodide ion non-selectivity index of the inorganic flocculant, which is calculated by [recovery rate of the iodide ions/residual rate of the fluoride ions] or [recovery rate of the iodide ions/residual rate of the phosphate ions], is 1.5 or more.
7. The method for producing an iodine component-containing aqueous solution according to any one of 1. to 6.,
   in which a concentration of the iodide ions in the untreated water is 5 g/L or more.

### ADVANTAGEOUS EFFECTS OF INVENTION

According to the present invention, there is provided a method for producing an iodine component-containing aqueous solution in which the concentration of fluoride ions and/or the concentration of phosphate ions in untreated water can be reduced by an aggregate method while maintaining the concentration of iodide ions.

### BRIEF DESCRIPTION OF THE DRAWINGS

[FIG. 1] A diagram schematically showing an example of a configuration of an iodine recovery system of the present embodiment.
[FIG. 2] A flow diagram showing an example of a method for producing an iodine component-containing aqueous solution according to the present embodiment.

### DESCRIPTION OF EMBODIMENTS

Hereinafter, an embodiment of the present invention will be described using the drawings. It is noted that in all the drawings, the same constitutional elements are denoted as the same reference numerals and explanations thereof will not be repeated, as appropriate. In addition, the figures are schematic views and do not correspond to the actual dimensional ratios.

The outline of the method for producing an iodine component-containing aqueous solution according to the present embodiment will be described.

The method for producing an iodine component-containing aqueous solution of the present embodiment includes a flocculation step of bringing an inorganic flocculant that selectively reacts with fluoride ions and/or phosphate ions into contact with untreated water containing iodide ions and fluoride ions and/or phosphate ions to obtain an aggregate formed by a reaction between the fluoride ions and/or the phosphate ions and the inorganic flocculant, and a separation step of removing the aggregate from the untreated water and leaving the iodide ions in the untreated water to obtain treated water.

According to the findings of the present inventors, an inorganic flocculant having aggregate properties of iodide ion non-selectivity has been found from among organic or inorganic flocculants. The inorganic flocculant having iodide ion non-selectivity selectively reacts with fluoride ions to form aggregates, but does not selectively react with iodide ions. Such iodide ion non-selectivity was also confirmed in a solution in which phosphate ions and iodide ions coexisted.

The generated aggregates can be easily removed from the system by a solid-liquid separation method or the like.

Therefore, according to the method for producing an iodine component-containing aqueous solution using the aggregate method of the present embodiment, it is possible to selectively separate the fluoride ions and/or the phosphate ions contained in the untreated water, and to leave the iodide ions while reducing the fluoride ions concentration and/or the phosphate ions concentration.

In addition, in the flocculation step, by setting the pH of the untreated water containing the inorganic flocculant within a predetermined range, the removal rate of the fluoride ions and/or the phosphate ions can be increased.

In addition, in the flocculation step, by setting the addition amount of the inorganic flocculant within a predetermined range, the amount of sludge generated derived from the aggregate can be suppressed while increasing the removal rate of the fluoride ions and/or the phosphate ions.

In addition, in the flocculation step, the aggregate size (floc size) can be controlled by appropriately selecting the type of the inorganic flocculant, so that the filterability in the solid-liquid separation can be improved.

An example of the treated water (recycled aqueous solution) obtained by the method for producing an iodine component-containing aqueous solution according to the present embodiment has a concentration of iodide ions of 5 g/L or more, a concentration of fluoride ions of 8 mg/L or less and/or a concentration of phosphate ions of 8 mg/L or less in terms of the phosphorus element, and a pH of 6.8 or more and 7.8 or less as necessary. Such a recycled aqueous solution is a solution suitable for the effluent standard based on the Water Pollution Control Law from the viewpoint of the fluoride ions concentration and the phosphate ions concentration.

In another aspect, the concentration of iodide ions in the recycled aqueous solution is not particularly limited, but may be, for example, 5 g/L or more or 7 g/L or more, and can be freely selected from an economic viewpoint.

In addition, in another form, the fluoride ions concentration in the recycled aqueous solution can be set according to the emission standards set by Japan or the emission standards set by municipalities, but is not limited thereto. In the recycled aqueous solution used overseas, the fluoride ions concentration can be set according to the emission standards set for each country.

An example of the concentration of fluoride ions in the recycled aqueous solution is, for example, 8 mg/L or less, preferably 6 mg/L or less, and more preferably 4 mg/L or less.

In addition, the concentration of phosphate ions in the recycled aqueous solution is, for example, 8 mg/L or less, preferably 6 mg/L or less, and more preferably 4 mg/L or less in terms of the phosphorus element.

In addition, in another form, the pH of the recycled aqueous solution having fluoride ions concentration of 8 mg/L or less is, for example, 3.0 or more and 8.5 or less, preferably 5.0 or more and 8.0 or less, and more preferably 7.0 or more and 7.5 or less.

In addition, the pH of the recycled aqueous solution having phosphate ions concentration of 8 mg/L or less in terms of the phosphorus element is, for example, 4.5 or more and 6.0 or less, preferably 5.0 or more and 6.0 or less, and more preferably 5.0 or more and 5.5 or less.

In addition, in another aspect, since the recycled aqueous solution is obtained by the aggregate method, the recycled aqueous solution may contain a part of the inorganic flocculant as long as the required properties in various applications to be applied are not impaired.

For example, the recycled aqueous solution may contain at least one of a cerium ion, a zirconium ion, an aluminum ion, a calcium ion, or an iron ion.

In addition, the recycled aqueous solution may be configured such that the concentration of at least one of cerium ions, zirconium ions, or calcium ions is, for example, 3 mg/L or more.

In another aspect, the recycled aqueous solution may be configured such that the concentration of aluminum ions is, for example, 1 mg/L or more.

In the present specification, the pH is measured by an "electrode method" in which the pH in a solution is measured by a potential difference generated between a pH electrode and a counter electrode.

In addition, the concentration of the iodide ions is measured by an ion chromatography method, a redox titration method, an ion electrode method, an ultraviolet absorption photometry method, an ICP emission spectroscopic analysis method (high-frequency inductively coupled plasma emission spectroscopic analysis method), or the like.

A colorimetry analysis method, a lanthanum-alizarin complexone photometry method, an ion chromatography method, an ion electrode method, or the like is used for measuring the concentration of the fluoride ions.

For the measurement of the concentration of phosphate ions, an ICP emission spectroscopic analysis method, a molybdenum blue absorption photometry method, an ion chromatography method, or the like can be used. In the case of ICP emission spectroscopic analysis method, the molecular weight of phosphate ions (PO₄⁻) is set to "94.97", the atomic weight of a phosphorus element is set to "30.97", and the concentration of the phosphate ions in terms of the phosphorus element is calculated from the measured value of the phosphorus element.

An ion chromatography method, an ICP emission spectroscopic analysis method, or the like is used for measuring the concentration of other elements.

The measurement sample may have a liquid temperature of about 25°C, and if necessary, a sample in which the pH is adjusted within a predetermined range using a pH adjuster described later is used.

Hereinafter, the configuration of the method for producing an iodine component-containing aqueous solution according to the present embodiment will be described in detail.

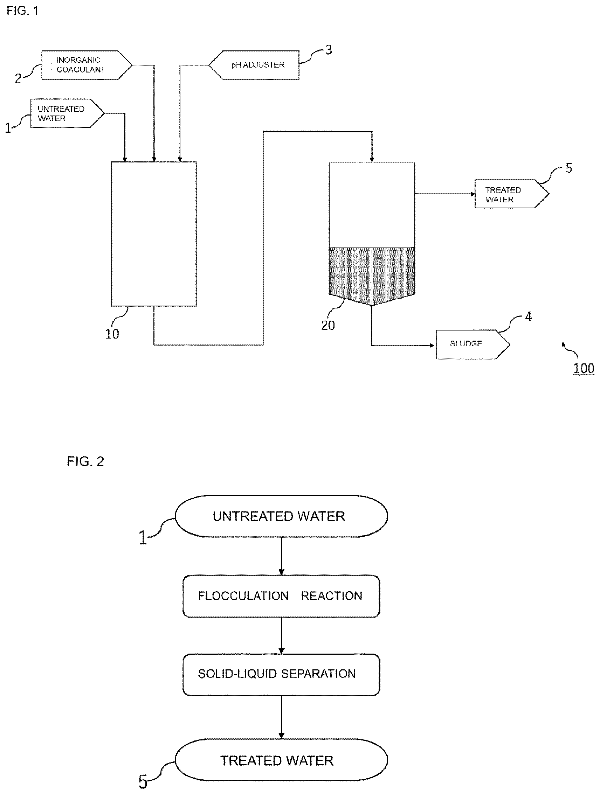

FIG. 2 is a flow diagram showing an example of a method for producing an iodine component-containing aqueous solution according to the present embodiment.

As shown in FIG. 2, an example of the method for producing an iodine component-containing aqueous solution includes an aggregate reaction step of bringing the inorganic flocculant into contact with the untreated water 1 to obtain an aggregate, and a solid-liquid separation step of excluding the generated aggregate from the untreated water 1 to obtain the treated water 5.

Each step of the method for producing an iodine component-containing aqueous solution of FIG. 2 will be described using the iodine recovery system 100 of FIG. 1.

FIG. 1 is a diagram schematically showing an example of a configuration of an iodine recovery system of the present embodiment.

As shown in FIG. 1, the iodine recovery system 100 includes a reactor 10 and a solid-liquid separation tank 20.

These tanks may be provided as individual tanks and connected by a line or the like for continuous treatment, or may be used as the same tank for batch treatment. In a case where the amount of treated water is large, continuous treatment is preferable.

First, the untreated water 1 and the inorganic flocculant 2 are introduced into the reactor 10 in the iodine recovery system 100. Then, in the reactor 10, a mixed solution containing the untreated water 1 and the inorganic flocculant 2 is obtained.

A method of introducing the untreated water 1 and the inorganic flocculant 2 is not particularly limited, but the inorganic flocculant 2 may be introduced after the untreated water 1 is introduced, or the untreated water 1 may be introduced into the reactor 10 in which the inorganic flocculant 2 is present. The total amount of the inorganic flocculant 2 to be added may be added at once, or may be added in a plurality of times.

The reactor 10 may include a stirrer. The aggregate reaction can be promoted by stirring the mixed liquid containing the untreated water 1 and the inorganic flocculant 2 at a predetermined stirring rate. The stirring speed is adjusted so that the inorganic flocculant 2 is appropriately dispersed.

The reactor 10 may include a heater. The reactor 10 may be used at an outside air temperature, but in a case where the outside air temperature is low, the inside of the reactor 10 may be heated until the liquid temperature of the mixed solution reaches a temperature of about 5°C to 30°C.

The untreated water 1 is not particularly limited as long as it is a liquid containing at least iodide ions and fluoride ions and/or phosphate ions, and a waste liquid such as industrial waste water is used.

Specific examples of the waste liquid include waste liquids such as waste liquids of electronic material manufacturing processes and waste liquids of manufacturing equipment cleaning, waste liquids discharged in chemical reactions, waste liquids generated in chemical synthesis such as pharmaceutical synthesis, and industrial plating waste liquids, and solutions obtained by dissolving waste liquids or waste solids.

In addition, the untreated water 1 is targeted in which the concentration of fluoride ions and the concentration of phosphate ions contained in the untreated water 1 exceed the effluent standards in each country.

The concentration of fluoride ions in the untreated water 1 before the addition of the inorganic flocculant 2 may exceed the emission standards of each country, for example, 8 mg/L.

In addition, the concentration of phosphate ions in the untreated water 1 before the addition of the inorganic flocculant 2 may be, for example, more than 8 mg/L in terms of the phosphorus element.

In the method of producing an iodine component-containing aqueous solution according to the present embodiment, in the untreated water 1 having such a high fluoride ion concentration and/or phosphate ion concentration, the fluoride ions concentration and the phosphate ions concentration can be reduced to be equal to or lower than the above-described effluent standards while suppressing a reduction in the iodide ion concentration.

The concentration of iodide ions in the untreated water 1 is not particularly limited, but for example, it may be 5 g/L or more or 7 g/L or more, and it may be appropriately selected from the viewpoint of economic efficiency.

The higher the concentration of the iodide ions contained in the untreated water 1, the more economically advantageous.

As the inorganic flocculant 2, a flocculant having iodide ion non-selectivity, which selectively reacts with fluoride ions and/or phosphate ions to generate aggregates, is used. The inorganic flocculant 2 having iodide ion non-selectivity can be suitably used for the treatment of the untreated water 1.

The inorganic flocculant 2 includes, for example, one or more metal salt flocculants selected from the group consisting of a cerium-based flocculant, a zirconium-based flocculant, an aluminum-based flocculant, a calcium-based flocculant, and an iron-based flocculant.

Among these, a cerium-based flocculant or an aluminum-based flocculant can be used from the viewpoint of improving the filterability during solid-liquid separation, since an aggregate (which may be referred to as a floc) having an appropriate size can be formed. In addition, from the viewpoint of excellent ability to remove fluoride ions and/or phosphate ions and reducing the amount of flocculant used and the amount of aggregates generated, it is preferable to use a cerium-based flocculant.

The inorganic flocculant is not limited in form, and may be any of a powder, a solution (a dissolved solution in which an active ingredient is dissolved in a solvent), or a dispersion (a slurry in which an active ingredient is not dissolved in a solvent). Among these, the handling can be improved by using a solution or a dispersion of an inorganic flocculant. In addition, the use of a solution of an inorganic flocculant can enhance the solution aggregate reactivity.

In a case where the inorganic flocculant is a solution or a dispersion, the lower limit of the concentration of the active component that aggregates the target to be flocculated can be appropriately adjusted according to the treatment amount, but for example, it may be 5% by mass or more, 10% by mass or more, or 20% by mass or more. The upper limit of the concentration of the active component is not particularly limited, but may be 99% by mass or less, 80% by mass or less, or 50% by mass or less, from the viewpoint of handleability.

In addition, as the effective component of the inorganic flocculant contained in the solution, specific examples of the flocculant described later can be used.

As the cerium-based flocculant, for example, cerium oxide, cerium hydroxide, cerium carbonate, cerium sulfate, cerium chloride, or the like is used. Among these, cerium carbonate, cerium sulfate, or cerium chloride is preferable from the viewpoint of solubility in a solvent. As an example of the cerium-based flocculant, a solution of a cerium compound described in JP6008455B can be used. Examples of a commercially available product of the solution of the cerium compound include READ-CX (L) manufactured by Nihonkaisui Co., Ltd.

As the aluminum-based flocculant, for example, polyaluminum chloride (PAC), aluminum sulfate (banded sulfate), aluminum chloride, or the like can be used.

As the calcium-based flocculant, for example, calcium chloride, calcium hydroxide (quicklime), or the like can be used.

As the zirconium-based flocculant, for example, zirconium oxychloride can be used.

As the iron-based flocculant, for example, ferrous chloride, ferrous polysulfate, or ferrous sulfate can be used.

The inorganic flocculants exemplified above may be used alone or in combination with two or more kinds thereof. In a case where the inorganic flocculant is added to the reactor 10 a plurality of times, the same flocculant may be added, and from the second time, another flocculant may be used in combination or the flocculant may be changed to another flocculant.

The addition amount of the inorganic flocculant 2 can be determined according to various treatment conditions (pH during aggregate reaction, fluoride ion residual rate, phosphate ion residual rate, iodide ion recovery rate, sludge generation amount, and the like), but as an example, it can also be determined using the following adsorption amount as an indicator.

The above-described adsorption amount can be calculated in advance based on a relationship between the addition amount of the inorganic flocculant 2 and the amount of fluorine ions and/or the amount of phosphate ions in the untreated water 1 removed by the addition of the inorganic flocculant 2.

First, the weight (g) of the effective component in the addition amount (g) of the inorganic flocculant 2 is calculated. Specifically, in a case where the addition amount of the inorganic flocculant 2 is denoted by M (g) and the concentration (% by weight) of the effective component in the inorganic flocculant 2 in the powder, the solution, or the dispersion is denoted by C_{CX}, the weight of the effective component is calculated from M × C_{CX}. For example, in a case where a solution containing 28% by weight of cerium in terms of cesium oxide is used as the inorganic flocculant 2 of the solution, the active component is cerium, and C_{CX} is "22.8% by weight" calculated from 28% by weight × [140/(140 + 16 × 2)]. However, the atomic amount of Ce is set to 140, and the atomic amount of O is set to 16.

Subsequently, the addition amount (g) of the inorganic flocculant 2 and the amount of the fluorine ions and/or the amount of the phosphate ions removed from the untreated water 1 in a case where the inorganic flocculant 2 is added are measured. The removed fluoride ions and/or phosphate ions react with the effective component of the inorganic flocculant 2 to form an aggregate. The amount of the fluorine element to be removed is calculated as the amount of the fluorine element to be removed C_{F} (g) in terms of the fluorine element (F), and the amount of the phosphoric acid to be removed is calculated as the amount of the phosphate ions to be removed C_{P04} (g) in terms of the phosphoric acid (PO₄).

The F adsorption amount (g/g) is calculated from C_{F}/(M × C_{CX}), and the PO₄ adsorption amount (g/g) is calculated from C_{P04}/(M × C_{CX}).

The upper limit of the F adsorption amount is equal to or less than the saturated adsorption amount of the fluorine ions due to the effective component in the inorganic flocculant 2, but is, for example, 400 or less, preferably 390 or less, and more preferably 380 or less. On the other hand, the lower limit of the F adsorption amount is not particularly limited and can be set from an economic viewpoint, but may be 0.1 or more, 1 or more, or 10 or more.

The upper limit of the amount of PO₄ adsorbed is equal to or less than the saturated adsorption amount of phosphate ions by the effective component in the inorganic flocculant 2, but is, for example, equal to or less than 800, preferably equal to or less than 780, and more preferably equal to or less than 760. On the other hand, the lower limit of the PO₄ adsorption amount is not particularly limited and can be set from an economic viewpoint, but may be 0.1 or more, 1 or more, or 10 or more.

In the present embodiment, the addition amount of the inorganic flocculant 2 can be adjusted to be equal to or less than the F adsorption amount or equal to or less than the PO₄ adsorption amount.

The pH adjuster 3 is introduced into the reactor 10 as necessary.

The pH of the mixed liquid in the reactor 10 is adjusted to, for example, about 3 to 12 by the pH adjuster 3.

The timing of adding the pH adjuster 3 is not particularly limited, but the pH adjuster 3 may be added to the untreated water 1 before or after mixing the untreated water 1 with the inorganic flocculant 2. The pH adjuster 3 may be introduced once or may be introduced a plurality of times. For example, the pH adjuster 3 may be added and introduced to the untreated water 1 after the pH adjuster 3 and the inorganic flocculant 2 are sequentially added to the untreated water 1, in order to readjust the pH.

The pH of the mixed solution in the reactor 10 is adjusted to an appropriate range depending on the type of the inorganic flocculant and the ion species to be adsorbed.

The pH of the untreated water 1 containing the inorganic flocculant 2 (for example, a cerium-based flocculant) and the fluoride ions is, for example, 3.0 or more and 11.5 or less, preferably 3.5 or more and 10.0 or less, and more preferably 6.0 or more and 8.0 or less. By setting the pH to be equal to or lower than the above-described upper limit value, the removal rate of the fluoride ions can be increased. In addition, the generation amount of sludge can be suppressed. By setting the pH to the above-described lower limit value or more, the sedimentation properties of the aggregate can be improved.

In addition, in another form, the pH of the untreated water 1 containing the inorganic flocculant 2 (for example, a cerium-based flocculant) and the phosphate ions is, for example, 3.0 or more and 11.0 or less, preferably 3.5 or more and 9.0 or less, and more preferably 4.0 or more and 7.0 or less. By setting the pH to be equal to or lower than the above-described upper limit value, the removal rate of phosphate ions can be increased. In addition, the generation amount of sludge can be suppressed. By setting the pH to the above-described lower limit value or more, the sedimentation properties of the aggregate can be improved.

As the pH adjuster 3, a known acidic agent or alkaline agent is used. These may be used alone, or two or more thereof may be used in combination.

As the acidic agent, for example, an inorganic acid such as hydrochloric acid, sulfuric acid, nitric acid, or carbonic acid, or an organic acid such as methanesulfonic acid, formic acid, acetic acid, citric acid, oxalic acid, or terephthalic acid can be used. Preferably, an inorganic mineral acid such as hydrochloric acid or sulfuric acid is used.

As the alkali agent, for example, sodium hydroxide, potassium hydroxide, calcium hydroxide, magnesium hydroxide, sodium carbonate, potassium carbonate, ammonia, or the like can be used. Preferably, an alkali hydroxide such as sodium hydroxide, potassium hydroxide, calcium hydroxide, or magnesium hydroxide is used.

A polymer flocculant is introduced into the reactor 10 as necessary.

The polymer flocculant causes the fine aggregates (flocs) to swell to an appropriate size, thereby improving the separability. In addition, the aggregates can be quickly precipitated.

As the polymer flocculant, a known polymer flocculant can be adopted, and the polymer flocculant may be, for example, any of anionic, cationic, or nonionic. These may be used alone, or two or more thereof may be used in combination.

Examples of the anionic polymer flocculant include sodium alginate, carboxymethyl cellulose, and salts of partially hydrolyzed polyacrylamide.

Examples of the cationic polymer flocculant include polyethyleneimine, polythiourea, and polydimethyldiallylammonium chloride.

Examples of the nonionic polymer flocculant include polyacrylamide.

Among these, as the polymer flocculant, for example, an anionic polymer flocculant may be used.

In the mixed liquid in the reactor 10, the fluoride ions and/or the phosphate ions reacts with the inorganic flocculant 2 to generate an aggregate. Then, the untreated water 1 (mixed liquid) containing the aggregate is introduced into the solid-liquid separation tank 20.

In the solid-liquid separation tank 20, the aggregate is separated as sludge 4 from the untreated water 1 (mixed liquid), and the treated water 5 containing no aggregate is recovered.

The solid-liquid separation tank 20 is not particularly limited, and for example, any solid-liquid separation device such as a sedimentation tank, a flotation tank, a filter, a centrifuge, or a membrane separation device can be used. In addition, in a case where a sedimentation tank or a flotation tank is used, a filtration device such as sand filtration may be installed in the latter stage. In a case where all the aggregates settle (for example, in a case where the pH of the untreated water 1 containing the aggregates is equal to or more than neutral having a pH of about 7 or more), sufficient solid-liquid separation can be performed by sedimentation separation. In addition, in a case where a part of the aggregates does not settle, it is preferable to adopt liquid filtration separation such as membrane filtration.

In a volume frequency particle size distribution of the aggregate measured by a laser diffraction scattering method, particle diameters at 10%, 50%, and 90% cumulative from a side of a small particle diameter are respectively defined as D₁₀, D₅₀, and D₉₀.

The lower limit of D₅₀ of the aggregate is, for example, 1 µm or more, preferably 2 µm or more, and more preferably 3 µm or more. On the other hand, the upper limit of D₅₀ of the aggregate may be, for example, 300 µm or less, 250 µm or less, or 100 µm or less, and it is preferably 80 µm or less, more preferably 60 µm or less, and still more preferably 50 µm or less. By setting D₅₀ to be equal to or greater than the above-described lower limit value, the filterability of the aggregates in the solid-liquid separation tank 20 can be improved. In addition, by setting D₅₀ to be equal to or less than the above-described upper limit value, the sedimentation properties of the aggregates in the solid-liquid separation tank 20 can be improved.

In addition, the lower limit of (D₉₀ - D₁₀)/D₅₀ of the aggregate is, for example, 1.0 or more, preferably 1.1 or more, and more preferably 1.2 or more. On the other hand, the upper limit of (D₉₀ - D₁₀)/D₅₀ of the aggregate is, for example, 5.0 or less, preferably 4.5 or less, more preferably 4.0 or less, and still more preferably 3.5 or less. By setting the range to be such, the balance between the filterability and the sedimentation of the aggregates in the solid-liquid separation tank 20 can be obtained.

The particle size distribution of the aggregate by the laser diffraction scattering method can be measured by the following procedure.

First, a predetermined amount of an inorganic flocculant is added to untreated water in a beaker, and then the mixture is stirred at 300 rpm using a stirrer, and the pH is adjusted to about 7 using caustic soda or hydrochloric acid.

Subsequently, the stirring is continued for about 10 minutes after the pH adjustment and then stopped to precipitate an aggregate (precipitate).

The mixed liquid in the beaker is subjected to pretreatment using filter paper having an opening size of about 1 µm, and the filtration residue (sludge) on the filter paper is obtained.

The obtained filtration residue is dispersed in ion exchange water and subjected to an ultrasonic treatment under the conditions of a frequency of 42 kHz and an irradiation time of 180 seconds, and then the particle size distribution of aggregates in such a dispersion is measured using a laser diffraction-type particle size distribution analyzer (SALD-2300, manufactured by Shimadzu Corporation).

The supernatant of the mixed solution in the reactor 10 may be recovered, the supernatant may be introduced into another reactor, and an inorganic flocculant may be added to the other reactor to perform the aggregate reaction process twice or more.

In addition, the other reactor may be a tank with a stirrer or may be a column filled with an inorganic flocculant. The supernatant can be passed through a column to carry out the aggregate reaction treatment.

Then, the mixed liquid (untreated water 1) recovered from another reactor is introduced into the solid-liquid separation tank 20.

The separated precipitate (sludge 4) is discharged outside the iodine recovery system 100. The discharged sludge 4 is dried and then subjected to sludge treatment. The smaller the amount of sludge 4 generated, the more the equipment cost and the treatment cost required for the sludge treatment can be reduced.

The treated water 5 recovered from the solid-liquid separation tank 20 may be subjected to known post-treatment such as pH adjustment treatment, if necessary.

The pH of the treated water 5 is, for example, 3.0 or more and 8.5 or less, preferably 5.0 or more and 8.0 or less, and more preferably 7.0 or more and 7.5 or less.

In the recovered treated water 5, iodide ions contained in the untreated water 1 remain, and most of the fluoride ions and/or phosphate ions are removed.

The concentration of the iodide ions in the treated water 5 can be the same as the value of the recycled aqueous solution.

In addition, the concentration of the fluoride ions and/or the concentration of the phosphate ions in the treated water 5 can be set to be the same as the values of the recycled aqueous solution.

In the present embodiment, the concentration of the iodide ions in the untreated water 1 is defined as C_{Ia} (mg/L), the concentration of the fluoride ions is defined as C_{Fa} (mg/L), and the concentration of the phosphate ions is defined as C_{Pa} (mg/L). The concentration of the iodide ions in the treated water 5 is defined as C_{Ib} (mg/L), the concentration of the fluoride ions is defined as C_{Fb} (mg/L), and the concentration of the phosphate ions is defined as C_{Pb} (mg/L).

In the method for producing an iodine component-containing aqueous solution according to the present embodiment, the recovery rate of the iodide ions calculated by (C_{Ib}/C_{Ia}) × 100 is, for example, 90% or more, preferably 95% or more, and more preferably 97% or more.

In another aspect, in the method for producing an iodine component-containing aqueous solution, the residual rate of the fluoride ions calculated by the expression [100 - [(C_{Fa} - C_{Fb})/C_{Fa}] × 100] is, for example, 15% or less, preferably 10% or less, more preferably 5% or less, and still more preferably 3% or less.

In addition, in another aspect, in the method for producing an iodine component-containing aqueous solution, the residual rate of the phosphate ions calculated by the expression [100 - [(C_{Pa} - C_{Pb})/C_{Pa}] × 100] is, for example, 15% or less, preferably 10% or less, more preferably 5% or less, and still more preferably 1% or less.

In the method for producing an iodine component-containing aqueous solution according to the present embodiment, the non-selective index of the iodide ion of the inorganic flocculant 2, which is calculated by [recovery rate of iodide ion/residual rate of fluoride ion] or [recovery rate of iodide ion/residual rate of phosphate ion], is, for example, 1.5 or more, preferably 20 or more, and more preferably 30 or more. In this manner, the selective recovery efficiency of the iodide ions can be increased.

As described above, the embodiments according to the present invention have been described; however, these are examples according to the present invention, and thus it is possible to adopt various configurations other than the above. In addition, the present invention is not limited to the embodiments described above and modifications, improvements, and the like are included in the present invention in a range in which it is possible to achieve the object of the present invention.

Hereinafter, examples of the reference forms will be added.

1a. A method for producing an iodine component-containing aqueous solution, including:
a flocculation step of bringing an inorganic flocculant that selectively reacts with fluoride ions and/or phosphate ions more than with iodide ions into contact with untreated water containing iodide ions and fluoride ions and/or phosphate ions, to obtain an aggregate formed by a reaction between the fluoride ions and/or the phosphate ions and the inorganic flocculant; and
a separation step of removing the aggregate from the untreated water to leave the iodide ions in the untreated water, to obtain treated water.

2a. The method for producing an iodine component-containing aqueous solution according to 1a,
in which, in the flocculation step, a pH of the untreated water containing the inorganic flocculant is 3.0 to 11.5.

3a. The method for producing an iodine component-containing aqueous solution according to 1a. or 2a.,
in which, in a case where a particle diameter at a point at which 50% of a cumulative volume of a particle diameter distribution is measured by a laser diffraction scattering method from a side with a small particle diameter in the volume frequency particle diameter distribution is denoted by D₅₀, the D₅₀ of the aggregate is 1 µm or more and 300 µm or less.

4a. The method for producing an iodine component-containing aqueous solution according to any one of 1a. to 3a.,
in which the inorganic flocculant includes one or two or more selected from the group consisting of a cerium-based flocculant, a zirconium flocculant, an aluminum-based flocculant, a calcium-based flocculant, and an iron-based flocculant.

5a. A method for producing the iodine component-containing aqueous solution according to any one of 1a. to 4a.,
in which, in a case where a concentration of the iodide ions in the untreated water is denoted by C_{Ia} (mg/L) and a concentration of the iodide ions in the treated water is denoted by C_{Ib} (mg/L),
a recovery rate of the iodide ions calculated by (C_{Ib}/C_{Ia}) × 100 is 90% or more.

6a. The method for producing an iodine component-containing aqueous solution according to 5a.,
in which, in a case where a concentration of fluoride ions in the untreated water is denoted by C_{Fa} (mg/L), a concentration of phosphate ions in the untreated water is denoted by C_{Pa} (mg/L), a concentration of fluoride ions in the treated water is denoted by C_{Fb} (mg/L), and a concentration of phosphate ions in the treated water is denoted by C_{Pb} (mg/L),
a residual rate of the fluoride ions calculated by [100 - [(C_{Fa} - C_{Fb})/C_{Fa}] × 100] is 5% or less, or
a residual rate of the phosphate ions calculated by [100 - [(C_{Pa} - C_{Pb})/C_{Pa}] × 100] is 5% or less.

7a. The method for producing an iodine component-containing aqueous solution according to 6a.,
in which iodide ions non-selectivity index of the inorganic flocculant, which is calculated by [the recovery rate of the iodide ions/the residual rate of the fluoride ions] or [the recovery rate of the iodide ions/the residual rate of the phosphate ions], is 1.5 or more.

8a. The method for producing an iodine component-containing aqueous solution according to any one of 1a. to 7a.,
in which a concentration of the iodide ions in the untreated water is 5 g/L or more.

9a. An inorganic flocculant used for untreated water containing iodide ions and fluoride ions and/or phosphate ions,
in which the inorganic flocculant is iodide ions non-selective inorganic flocculant that selectively reacts with fluoride ions and/or phosphate ions with respect to iodide ions to generate an aggregate.

10a. A recycled aqueous solution containing iodide ions,
in which a concentration of the iodide ions in the recycled aqueous solution is 5 g/L or more, and
a concentration of fluoride ions and/or a concentration of phosphate ions contained in the recycled aqueous solution is 8 mg/L or less.

11a. A recycled aqueous solution which is the recycled aqueous solution of 10a,
in which the recycled aqueous solution contains at least one of a cerium ion, a zirconium ion, an aluminum ion, a calcium ion, or an iron ion.

In addition, an example of a reference form in the inorganic flocculant that is non-selective to iodide ions will be added.

1b. An inorganic flocculant used for untreated water containing iodide ions, and fluoride ions and/or phosphate ions,
in which the inorganic flocculant is iodide ions non-selective inorganic flocculant that selectively reacts with the fluoride ions and/or the phosphate ions with respect to the iodide ions to generate an aggregate.

2b. The inorganic flocculant having iodide ion non-selectivity according to 1b.,
in which the inorganic flocculant is used in a flocculation step of obtaining an aggregate formed by a reaction between fluoride ions and/or phosphate ions and the inorganic flocculant by bringing the inorganic flocculant into contact with untreated water containing iodide ions, fluoride ions, and/or phosphate ions, the inorganic flocculant being more selective for the fluoride ions and/or the phosphate ions than the iodide ion.

3b. The inorganic flocculant that is iodide ion non-selective inorganic flocculant according to 1b. or 2b.,
in which the inorganic flocculant is iodide ions non-selective inorganic flocculant containing one or more selected from the group consisting of a cerium-based flocculant, a zirconium-based flocculant, an aluminum-based flocculant, a calcium-based flocculant, and an iron-based flocculant.

4b. The inorganic flocculant having iodide ion non-selectivity according to any one of 1b. to 3b.,
in which (D90 - D10)/D50 of an aggregate formed by a reaction between fluoride ions and/or phosphate ions and the inorganic flocculant, which is measured according to the following procedure, is 1.0 or more and 5.0 or less,

### (Procedure)

First, a predetermined amount of the inorganic flocculant is added to untreated water containing iodide ions, fluoride ions, and/or phosphate ions in a beaker, and then the mixture is stirred at 300 rpm using a stirrer, and the pH is adjusted to about 7 using caustic soda or hydrochloric acid.

Subsequently, the stirring is continued for about 10 minutes after the pH adjustment and then stopped to precipitate the aggregate.

The mixed liquid in the beaker is subjected to a filtration treatment using a filter paper having an opening size of about 1 µm to obtain a filtration residue on the filter paper.

The obtained filtration residue is dispersed in ion exchange water, and subjected to an ultrasonic treatment under the conditions of a frequency of 42 kHz and an irradiation time of 180 seconds, and then the volume frequency particle size distribution of the aggregate in such a dispersion is measured using a laser diffraction type particle size distribution analyzer. In the obtained volume frequency particle size distribution, particle diameters at 10%, 50%, and 90% cumulative from the side of the small particle diameter are respectively defined as D10, D50, and D90.

5b. The inorganic flocculant having iodide ion non-selectivity described in 4b.,
in which D50 of the aggregate measured according to the procedure is 1 µm or more and 300 µm or less.

An example of a reference form in which the recycled aqueous solution treated with iodide ions non-selective inorganic flocculant and the recycled aqueous solution treated with an inorganic flocculant non-selective to iodide ions are used will be added.

1c. A recycled aqueous solution containing iodide ions,
in which a concentration of the iodide ions in the recycled aqueous solution is 5 g/L or more, and
a concentration of fluoride ions and/or a concentration of phosphate ions contained in the recycled aqueous solution is 8 mg/L or less.

2c. The recycled aqueous solution of 1c.,
in which the recycled aqueous solution contains at least one of a cerium ion, a zirconium ion, an aluminum ion, a calcium ion, or an iron ion.

### [Examples]

A detailed description will be given below of the present invention with reference to Examples, but the present invention is not limited to the descriptions of these Examples.

### (Inorganic flocculant)

· Inorganic flocculant A: cerium-based flocculant (manufactured by NIPPON KASEI CHEMICAL CO., LTD., READ-CX (L))
· Inorganic flocculant B: aluminum-based flocculant (poly aluminum chloride (PAC))
· Inorganic flocculant C: calcium-based flocculant (CaCl₂)

### (Untreated water (waste liquid))

Untreated waters A and B having the chemical compositions shown in Tables 1 and 2 below were prepared using waste liquids discharged in a chemical reaction.
· Untreated water A: aqueous solution containing iodide ions and fluoride ions, having the component composition of Table 1 below
· Untreated water B: aqueous solution containing iodide ions and phosphate ions, having a component composition shown in Table 2 below

In Tables 1 and 2, components below the detection limit are not described.

### [Table 1]

**Table 1**

| Untreated water A | mg/L |
|---|---|
| pH | 3.5 |
| F | 231 |
| I | 37,422 |
| B | 0.3 |
| Ca | 0.9 |
| Mg | 1.1 |
| Si | 12.5 |
| Al | 0.2 |
| Fe | 7.6 |
| Mn | 0.2 |
| Zn | 0.3 |
| Cl | 1,157 |
| SO₄ | 12,899 |

### [Table 2]

**Table 2**

| Untreated water B | mg/L |
|---|---|
| pH | 8.8 |
| PO₄ | 1,675 |
| I | 7,308 |
| Ca | 1.1 |
| Mg | 0.3 |
| Si | 17.5 |
| Al | 1.1 |
| Fe | 1.6 |
| Cr | 0.1 |
| Zn | 0.1 |
| Cl | 1,888 |
| F | 1 |
| SO₄ | 2,125 |

In Tables 1 and 2, component symbols such as I, F, and PO₄ represent ions.

The fluoride ion (F⁻) was measured by an ion electrode method using a water quality analyzer (manufactured by Horiba, Ltd., F-73). In the ion electrode method, free fluoride ions in the measurement solution are used as a measurement target. The measurement mode of a water quality analyzer (manufactured by Horiba, Ltd., F-73) was switched, and the pH in the liquid was measured under a condition of a liquid temperature of about 20°C to 25°C using a pH electrode attached to the device.

In addition, iodide ions (I⁻), phosphate ions (PO₄³⁻), and other ions were measured by ICP emission spectroscopic analysis method using an ICP emission spectrometer (CIROS CCD, manufactured by Rigaku Corporation). However, the concentration of phosphate ions is a value obtained by converting the concentration of phosphorus element obtained by the measurement.

In addition, the composition analysis of the following treatment water was also carried out using the same method.

### <Test 1: pH during flocculation step>

### [Examples 1 to 5]

In Test 1, a predetermined amount of the untreated water A of Table 1 was put into a beaker, 0.6% by mass of the inorganic flocculant A was added to the untreated water A, the pH of the untreated water A was adjusted to a value shown in Table 3 using sodium hydroxide as a pH adjuster, and the mixture was stirred according to the following stirring conditions using a jar tester (flocculation step).

However, the addition amount (% by mass) of the inorganic flocculant means a mass ratio in a case where a predetermined mass of the untreated water calculated from a predetermined volume of the untreated water contained in the beaker based on the liquid specific gravity is set to 100% by mass. For example, an addition amount of the inorganic flocculant of 0.6 (% by mass) means that 6d (g) calculated from an expression of 1000 (mL) × liquid specific gravity d of the untreated water × 0.6 (% by mass) is added to 1000 (mL) of the untreated water.

### [Stirring conditions]

· Speed: 100 rpm to 300 rpm
· Time: 10 minutes to 15 minutes
· Temperature (liquid temperature): 20°C to 25°C

After stirring, the aggregates generated in the beaker were precipitated, and the supernatant solution in the beaker was recovered to obtain treated waters of Examples 1 to 5. The obtained treated water was subjected to a compositional analysis using the above-described method. The results are shown in Table 3.

### (Examples 6 to 10)

Treated waters of Examples 6 to 10 were obtained in the same manner as in Example 1, except that the untreated water B in Table 2 was used instead of the untreated water A, the addition amount of the inorganic flocculant A was changed to 1.0% by mass, and sodium hydroxide or sulfuric acid was used as the pH adjuster. The results of the compositional analysis of the treatment water are shown in Table 4.

In Table 3, the F removal rate was calculated by [(C_{Fa} - C_{Fb})/C_{Fa}] × 100 in a case where the concentration of fluoride ions in untreated water was C_{Fa} (mg/L) and the concentration of fluoride ions in treated water was C_{Fb} (mg/L).

In Table 4, the PO₄ removal rate was calculated by [(C_{Pa} - C_{Pb})/C_{Pa}] × 100 in a case where the concentration of phosphate ions in untreated water was defined as C_{Pb} (mg/L) and the concentration of phosphate ions in treated water was defined as C_{Pa} (mg/L).

In addition, the recovery rate of the iodide ions (I recovery rate) was calculated by (C_{Ib}/C_{Ia}) × 100 in a case where the concentration of the iodide ions in the untreated water was defined as C_{Ia} (mg/L) and the concentration of the iodide ion in the treated water was defined as C_{Ib} (mg/L). In all of Examples of Tables 3 and 4, the recovery rate of the iodide ions was 90% or more.

From Tables 3 and 4, in Examples 1 to 10, results were obtained in which fluoride ions and phosphate ions could be reduced while iodide ions were allowed to remain.

### [Table 3]

**Table 3**

| | pH | F Concentration | F Removal rate | I Concentration |
|---|---|---|---|---|
| | | [mg/L] | [%] | [mg/L] |
| Untreated water A (F, I) | 3.5 | 231.4 | - | 37,422 |
| Example 1 | 3.3 | 7.4 | 96.8 | 37,147 |
| Example 2 | 5.4 | 5.8 | 97.5 | 37,393 |
| Example 3 | 7.2 | 3.1 | 98.7 | 37,081 |
| Example 4 | 9.2 | 14.5 | 93.7 | 37,284 |
| Example 5 | 11.4 | 106.3 | 54.0 | 37,396 |

### [Table 4]

**Table 4**

| | pH | PO₄ Concentration | PO₄ Removal rate | I Concentration |
|---|---|---|---|---|
| | | [mg/L] | [%] | [mg/L] |
| Untreated water (PO₄, I) | 8.8 | 1,675 | - | 7,308 |
| Example 6 | 3.3 | 59 | 96.5 | 7,306 |
| Example 7 | 5.4 | 1 | 99.9 | 7,304 |
| Example 8 | 7.2 | 89 | 94.7 | 7,307 |
| Example 9 | 9.3 | 111 | 93.4 | 7,307 |
| Example 10 | 11.3 | 166 | 90.1 | 7,306 |

### <Test 2: Addition amount of flocculant>

### (Examples 11 to 17)

In Test 2, a predetermined amount of the untreated water A of Table 1 was put in a beaker, any of the inorganic flocculants A to C was added thereto at an addition amount (% by mass) shown in Table 5, the pH of the untreated water A was adjusted to about 7.0 to 7.5 using sodium hydroxide as a pH adjuster, and stirring was carried out under the same stirring conditions as in Test 1 using a jar tester (flocculation step).

After stirring, the aggregates generated in the beaker were precipitated, and the supernatant solution in the beaker was recovered to obtain treated waters of Examples 11 to 17. The obtained treated water was subjected to composition analysis by the above-described method. The results are shown in Table 5.

### (Examples 18 to 21)

Treated waters of Examples 18 to 21 were obtained in the same manner as in Example 11, except that the untreated water B in Table 2 was used instead of the untreated water A, any of the inorganic flocculants A to C was added in the addition amount (mass%) shown in Table 5, and the pH of the untreated water B was adjusted to about 6.0 to 6.5. The results of the compositional analysis of the treatment water are shown in Table 6.

From Tables 5 and 6, in Examples 11 to 21, results were obtained in which fluoride ions and phosphate ions could be reduced while iodide ions were allowed to remain.

In Tables 5 and 6, the iodide ion non-selectivity index (I non-selectivity index) was calculated by I recovery rate/F residual rate or I recovery rate/PO₄ residual rate.

The I recovery rate is described in Tables 3 and 4. The F residual rate was calculated by (100% - F removal rate), and the PO₄ residual rate was calculated by (100% - PO₄ removal rate).

In a case of being compared at the same addition amount of 1.0% by mass, it was found that the inorganic flocculant A had a high I non-selectivity index and could efficiently and selectively recover the iodide ions, as compared with the other inorganic flocculants B and C.

### [Table 5]

**Table 5**

| | Flocculant type | Addition amount of flocculant | F Concentration | F Residual rate | I Concentration | I Recovery rate | I Non-selectivity index |
|---|---|---|---|---|---|---|---|
| | | [wt%] | [mg/L] | [%] | [mg/L] | [%] | |
| Untreated water A (F, I) | - | - | 231.4 | - | 37,422 | - | - |
| Example 11 | | 0.2 | 101.6 | 43.9 | 37,344 | 99.79 | 2.3 |
| Example 12 | | 0.4 | 8.0 | 3.5 | 37,406 | 99.96 | 28.9 |
| Example 13 | | 1.0 | 3.1 | 1.3 | 37,404 | 99.95 | 75.1 |
| Example 14 | | 1.0 | 29.4 | 12.7 | 37,050 | 99.00 | 7.8 |
| Example 15 | | 5.0 | 4.0 | 1.7 | 35,888 | 95.90 | 55.5 |
| Example 16 | | 1.0 | 21.1 | 9.1 | 36,451 | 97.40 | 10.7 |
| Example 17 | | 5.0 | 13.0 | 5.6 | 36,288 | 96.97 | 17.3 |

### [Table 6]

**Table 6**

| | Flocculant type | Addition amount of flocculant | PO₄ Concentration | PO₄ Residual rate | I Concentration | I Recovery rate | I Non-selectivity index |
|---|---|---|---|---|---|---|---|
| | | [wt%] | [mg/L] | [%] | [mg/L] | [%] | |
| Untreated water B (PO₄, I) | - | - | 1,675 | - | 7,308 | - | - |
| Example 18 | | 0.4 | 973 | 58.1 | 7,117 | 97.38 | 1.7 |
| Example 19 | | 0.6 | 666 | 39.8 | 6,955 | 95.17 | 2.4 |
| Example 20 | | 0.8 | 296 | 17.6 | 6,382 | 87.32 | 4.9 |
| Example 21 | | 1.0 | 10 | 0.6 | 6,820 | 93.31 | 151.1 |

### <Test 3: I concentration in untreated water>

Sodium iodide was dissolved in the untreated water A of Table 1 to prepare untreated water A' in which the concentration of iodide ions was increased from about 37 g/L to about 100 g/L.

In Test 3, 0.2% to 0.6% by mass of the inorganic flocculant A was added to the obtained untreated water A', the pH of the untreated water A' was adjusted to about 7.0 to 7.5 with sodium hydroxide, and stirring was carried out under the same stirring conditions as in Test 1 using a jar tester (flocculation step).

After stirring, the aggregates generated in the beaker were precipitated, and the supernatant solution in the beaker was recovered to obtain treated waters of Examples 22 to 24. The obtained treated water was subjected to composition analysis by the above-described method. The results are shown in Table 7.

From Table 7, in Examples 22 to 24, even in the untreated water A' having a high concentration of iodide ion, a result in which the fluoride ions and the phosphate ions can be reduced while the iodide ion remains is obtained.

### [Table 7]

**Table 7**

| | Addition amount of flocculant | F Concentration | F Residual rate | I Concentration | I Recovery rate | I Non-selectivity index |
|---|---|---|---|---|---|---|
| | [wt%] | [mg/L] | [%] | [mg/L] | [%] | |
| Untreated water A (F, I) | - | 231.4 | - | 99,659 | - | - |
| Example 22 | 0.2 | 102.8 | 44.4 | 99,553 | 99.89 | 2.2 |
| Example 23 | 0.4 | 7.7 | 3.3 | 95,222 | 95.55 | 28.9 |
| Example 24 | 0.6 | 2.1 | 0.9 | 96,569 | 96.90 | 106.8 |

The volume frequency particle size distribution of the aggregate was measured by a laser diffraction scattering method according to the following procedure.

### <Measurement of particle size distribution by laser diffraction scattering method>

First, 0.6% by mass of the inorganic flocculant of Table 8 was added to the untreated water of Table 8 in a beaker, and then the mixture was stirred at 300 rpm using a stirrer, and the pH was adjusted to about 7 using caustic soda or hydrochloric acid.

Subsequently, the stirring was continued for about 10 minutes after the pH adjustment and then stopped, and the aggregate (precipitate) was allowed to settle.

The mixed liquid in the beaker was subjected to over-treatment using filter paper (aperture size: approximately 1 µm, JIS standard 3801: 5 kinds C), and the filtration residue (sludge) on the filter paper was obtained.

The obtained filtration residue was dispersed in ion exchange water and subjected to an ultrasonic treatment under the conditions of a frequency of 42 kHz and an irradiation time of 180 seconds, and then the particle size distribution of aggregates in such a dispersion was measured using a laser diffraction-type particle size distribution analyzer (SALD-2300, manufactured by Shimadzu Corporation).

In the volume frequency particle size distribution of the aggregate, particle diameters at 10%, 50%, and 90% cumulative from the small side of the particle diameter are respectively defined as D₁₀, D₅₀, and D₉₀. The results of these particle diameters are shown in Table 8.
the aggregates formed of the inorganic flocculant A or B exhibited no filter clogging and excellent filterability as compared with the case of using the inorganic flocculant C.

### [Table 8]

**Table 8**

| | | D10 (µm) | D50 (µm) | D90 (µm) | D90 - D10/D50 |
|---|---|---|---|---|---|
| Untreated water A | Inorganic flocculant C | 0.035 | 0.043 | 0.053 | 0.4 |
| | Inorganic flocculant B | 11 | 25 | 54 | 1.7 |
| | Inorganic flocculant A | 8 | 19 | 39 | 1.6 |
| Untreated water B | Inorganic flocculant A | 14 | 33 | 101 | 2.6 |

### (Inorganic flocculant)

· Inorganic flocculant D: zirconium-based flocculant (zirconium oxychloride)
· Inorganic flocculant E: iron-based flocculant (ferric chloride)

### (Untreated water (waste liquid))

The following untreated water A'' and B" were adjusted using the waste liquid discharged in the chemical reaction.

However, the untreated water A'' is different from the untreated water A in Table 1 in that the pH is 4.0, the F concentration is 279.6 mg/L, and the I concentration is 35,510 mg/L. The untreated water B" is different from the untreated water B in Table 1 in that the pH is 8.9, the F concentration is 1,651 mg/L, and the I concentration is 7,047 mg/L.

### <Examples 25 to 28>

The untreated water A'' was placed in a beaker, and the inorganic flocculant C or D having an addition amount shown in Table 9 was added to the untreated water A''. Then, the pH of the untreated water A'' was adjusted to a value shown in Table 9 using sodium hydroxide or sulfuric acid as a pH adjuster, and the mixture was stirred according to the following stirring conditions using a jar tester (flocculation step).

However, the addition amount (% by mass) of the inorganic flocculant means a mass ratio in a case where a predetermined mass of the untreated water calculated from a predetermined volume of the untreated water contained in the beaker based on the liquid specific gravity is set to 100% by mass, as in the above description.

### [Stirring conditions]

· Speed: 100 rpm to 300 rpm
· Time: 10 minutes to 15 minutes
· Temperature (liquid temperature): 20°C to 25°C

After stirring, the aggregates generated in the beaker were precipitated, and the supernatant solution in the beaker was recovered to obtain treated water. The obtained treated water was subjected to a compositional analysis using the above-described method. The results are shown in Table 9.

### <Examples 29 to 35>

The same flocculation step as in <Examples 25 to 28> was carried out except that the untreated water A'' was changed to the untreated water B'', and the obtained treated water was subjected to composition analysis using the above-described method. The results are shown in Table 10.

### [Table 9]

**Table 9**

| | Flocculant type | Addition amount of flocculant | Final pH | F Concentration | F Residual rate | I Concentration | I Recovery rate | I Non-selectivity index |
|---|---|---|---|---|---|---|---|---|
| | | [wt%] | | [mg/L] | [%] | [mg/L] | [%] | |
| Untreated water A" (F, I) | - | - | 4.0 | 279.6 | - | 35,510 | - | - |
| Example 25 | D (Zr-based) | 1.0 | 7.1 | 43.4 | 15.5 | 36,210 | 101.97 | 6.6 |
| Example 26 | D (Zr-based) | 5.0 | 7.1 | 4.3 | 1.5 | 34, 370 | 96.79 | 63.4 |
| Example 27 | D (Zr-based) | 1.0 | 5. 4 | 9. 4 | 3.4 | 35,855 | 100.97 | 29.9 |
| Example 28 | E (Fe-based) | 7.5 | 4.4 | 96.6 | 34.5 | 35,050 | 98.70 | 2.9 |

### [Table 10]

**Table 10**

| | Flocculant type | Addition amount of flocculant | Final pH | PO₄ Concentration | PO₄ Residual rate | I Concentration | I Recovery rate | I Non-selectivity index |
|---|---|---|---|---|---|---|---|---|
| | | [wt%] | | [mg/L] | [%] | [mg/L] | [%] | |
| Untreated water B" (PO₄, I) | - | - | 8.9 | 1,651 | - | 7,047 | - | - |
| Example 29 | D (Zr-based) | 5.0 | 6.6 | 0.6 | 0.0 | 7,047 | 100.00 | 2, 692.5 |
| Example 30 | D (Zr-based) | 1.0 | 4.4 | 2 | 0.1 | 7,082 | 100.50 | 902.0 |
| Example 31 | E (Fe-based) | 1.0 | 6.4 | 10 | 0.6 | 7,093 | 100.65 | 174.8 |
| Example 32 | E (Fe-based) | 5.0 | 6. 4 | 2 | 0.1 | 7,042 | 99.93 | 1, 076.2 |
| Example 33 | E (Fe-based) | 1.0 | 4.4 | 4 | 0.2 | 7,029 | 99.74 | 447.6 |
| Example 34 | E (Fe-based) | 1.0 | 6.4 | 10 | 0.6 | 7,093 | 100.65 | 174.8 |
| Example 35 | E (Fe-based) | 1.0 | 8.5 | 106 | 6. 4 | 7,003 | 99.38 | 15.5 |

From Tables 9 and 10, it was found that in all of Examples 25 to 35, the recovery rate of the iodide ions (I recovery rate) was 90% or more. In addition, it was shown that the fluoride ions concentration (F concentration) and the phosphate ions concentration (PO₄ concentration) can be sufficiently reduced.

Therefore, it has been shown that by using the zirconium-based flocculant and the iron-based flocculant, the concentration of fluoride ions and/or the concentration of phosphate ions in untreated water can be reduced by the aggregate method while maintaining the concentration of iodide ions.

In addition, the volume frequency particle size distribution of the aggregate was measured by laser diffraction scattering method in the same manner as in <Measurement of particle size distribution by laser diffraction scattering method> except that 5% by mass of the inorganic flocculant of Table 11 was added to the untreated water of Table 11 in the beaker.

The aggregates formed of the inorganic flocculants D and E had no filter clogging and exhibited excellent filterability as compared with the case of using the inorganic flocculant C.

### [Table 11]

**Table 11**

| | | D10 (µm) | D50 (µm) | D90 (µm) | (D90 - D10)/D50 |
|---|---|---|---|---|---|
| Untreated water A' | Inorganic flocculant D | 10 | 43 | 117 | 2.5 |
| | Inorganic flocculant E | 6 | 196 | 464 | 2.3 |
| Untreated water B' | Inorganic flocculant D | 10 | 27 | 87 | 2.9 |
| | Inorganic flocculant E | 14 | 42 | 109 | 2.3 |

Priority is claimed on Japanese Patent Application No. 2022-191318, filed on November 30, 2022, the disclosure of which is incorporated herein by reference.

### REFERENCE SIGNS LIST

- 1: untreated water
- 2: inorganic flocculant
- 3: pH adjuster
- 4: sludge
- 5: treated water
- 10: reactor
- 20: solid-liquid separation tank
- 100: iodine recovery system

## Claims

1. A method for producing an iodine component-containing aqueous solution, comprising:
a flocculation step of bringing an inorganic flocculant that selectively reacts with fluoride ions and/or phosphate ions more than with iodide ions into contact with untreated water containing iodide ions and fluoride ions and/or phosphate ions, to obtain an aggregate formed by a reaction between the fluoride ions and/or the phosphate ions and the inorganic flocculant; and
a separation step of removing the aggregate from the untreated water to leave the iodide ions in the untreated water, to obtain treated water,
wherein the inorganic flocculant includes one or two or more selected from the group consisting of a cerium-based flocculant, a zirconium-based flocculant, an aluminum-based flocculant, a calcium-based flocculant, and an iron-based flocculant.

2. The method for producing an iodine component-containing aqueous solution according to Claim 1,
wherein, in the flocculation step, a pH of the untreated water containing the inorganic flocculant is 3.0 or more and 11.5 or less.

3. The method for producing an iodine component-containing aqueous solution according to Claim 1 or 2,
wherein, in a case where a volume frequency particle size distribution is measured using a laser diffraction scattering method, and a particle diameter corresponding to 50% cumulative distribution from a smaller side in the volume frequency particle size distribution is defined as D₅₀, the D₅₀ of the aggregate is 1 µm or more and 300 µm or less.

4. The method for producing an iodine component-containing aqueous solution according to Claim 1 or 2,
wherein, in a case where a concentration of the iodide ions in the untreated water is denoted by C_{Ia} (mg/L) and a concentration of the iodide ions in the treated water is denoted by C_{Ib} (mg/L), a recovery rate of the iodide ions calculated by (C_{Ib}/C_{Ia}) × 100 is 90% or more.

5. The method for producing an iodine component-containing aqueous solution according to Claim 4,
wherein, in a case where a concentration of the fluoride ions in the untreated water is denoted by C_{Fa} (mg/L), a concentration of the phosphate ions in the untreated water is denoted by C_{Pa} (mg/L), a concentration of the fluoride ions in the treated water is denoted by C_{Fb} (mg/L), and a concentration of the phosphate ions in the treated water is denoted by C_{Pb} (mg/L), a residual rate of the fluoride ions calculated by [100 - [(C_{Fa} - C_{Fb})/C_{Fa}] × 100] is 5% or less, or
a residual rate of the phosphate ions calculated by [100 - [(C_{Pa} - C_{Pb})/C_{Pa}] × 100] is 5% or less.

6. The method for producing an iodine component-containing aqueous solution according to Claim 5,
wherein the iodide ion non-selectivity index of the inorganic flocculant, which is calculated by [recovery rate of the iodide ions/residual rate of the fluoride ions] or [recovery rate of the iodide ions/residual rate of the phosphate ions], is 1.5 or more.

7. The method for producing an iodine component-containing aqueous solution according to Claim 1 or 2,
wherein a concentration of the iodide ions in the untreated water is 5 g/L or more.
